# EUROPEAN PATENT SPECIFICATION

(11) **EP 4 125 292 B1**
(45) Date of publication and mention of the grant of the patent: **13.08.2025**
(21) Application number: 22180190.5
(22) Date of filing: 21.06.2022
(51) Int. Cl.: H04W 36/00, H04W 36/36, H04W 52/14, H04W 52/36, H04W 52/40

(54) **CONDITIONAL CELL CHANGE FOR EMISSION MITIGATION**
BEDINGTER ZELLENWECHSEL ZUR EMISSIONSMINDERUNG
CHANGEMENT DE CELLULE CONDITIONNEL POUR RÉDUCTION D'ÉMISSION

(30) Priority: 30.07.2021 US 202163227931 P
(43) Date of publication of application: 01.02.2023
(73) Proprietor: Apple Inc., Cupertino, CA 95014 (US)
(72) Inventor: HAGHANI, Ehsan, Cupertino, CA, 95014 (US); NABAR, Rohit U., Cupertino, CA, 95014 (US); SUBRAHMANYA, Parvathanathan, Cupertino, CA, 95014 (US)
(74) Representative: Lang, Johannes

(56) References cited:
- US-A1- 2021 105 680
- NOKIA: "Mobility Enhancement for Rel-18", no. 20210628 - 20210702, 7 June 2021 (2021-06-07), XP052025640, Retrieved from the Internet <URL:https://ftp.3gpp.org/tsg_ran/TSG_RAN/TSGR_AHs/2021_06_RAN_Rel18_WS/Docs/RWS-210078.zip RWS-210078 Rel-18 RAN WS Mobility_Enhancement.pdf> [retrieved on 20210607]
- NOKIA ET AL: "MPE impact on MRO", vol. RAN WG2, no. Electronic; 20210412 - 20210420, 1 April 2021 (2021-04-01), XP051992142, Retrieved from the Internet <URL:https://ftp.3gpp.org/tsg_ran/WG2_RL2/TSGR2_113bis-e/Docs/R2-2103553.zip R2-2103553 MPE impact on MRO.docx> [retrieved on 20210401]

## Description

### BACKGROUND

Third Generation Partnership Project (3GPP) Technical Specifications (TSs) define standards for wireless networks. These TSs describe aspects related to mobility and power control for operation within such networks.

The document titled "Mobility Enhancement for Rel-18", 3GPP draft RWS-210078, June 7, 2021, relates to MPE handling in Conditional Handover (CHO). The document provides an example in which based on information from a candidate CHO target cell (e.g., power control parameters) that is provided by a source cell, a UE can approximate the prospect MPE related UL degradation of a candidate target cell. The computed MPE related uplink can be then considered in the CHO execution condition to determine a more suitable target cell and a better execution time for the CHO.

US 2021/105680 A1 relates to performing restriction based handover.

### SUMMARY OF THE INVENTION

The invention is defined by the appended independent claims. The dependent claims define advantageous embodiments.

### BRIEF DESCRIPTION OF THE DRAWINGS

FIG. 1 illustrates a network environment in accordance with some embodiments.
FIG. 2 illustrates a signaling diagram in accordance with some embodiments.
FIG. 3 illustrates an operational flow/algorithmic structure in accordance with some embodiments.
FIG. 4 illustrates another operational flow/algorithmic structure in accordance with some embodiments.
FIG. 5 illustrates another operational flow/algorithmic structure in accordance with some embodiments.
FIG. 6 illustrates a user equipment in accordance with some embodiments.
FIG. 7 illustrates a base station in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, and techniques in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

The following is a glossary of terms that may be used in this disclosure.

The term "circuitry" as used herein refers to, is part of, or includes hardware components that are configured to provide the described functionality. The hardware components may include an electronic circuit, a logic circuit, a processor (shared, dedicated, or group) or memory (shared, dedicated, or group), an application-specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), or a digital signal processor (DSP). In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer to an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, and network interface cards.

The term "user equipment" or "UE" as used herein refers to a device with radio communication capabilities that may allow a user to access network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, or workload units. A "hardware resource" may refer to compute, storage, or network resources provided by physical hardware elements. A "virtualized resource" may refer to compute, storage, or network resources provided by virtualization infrastructure to an application, device, or system. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, or a virtualized network function.

The term "information element" refers to a structural element containing one or more fields. The term "field" refers to individual contents of an information element, or a data element that contains content. An information element may include one or more additional information elements.

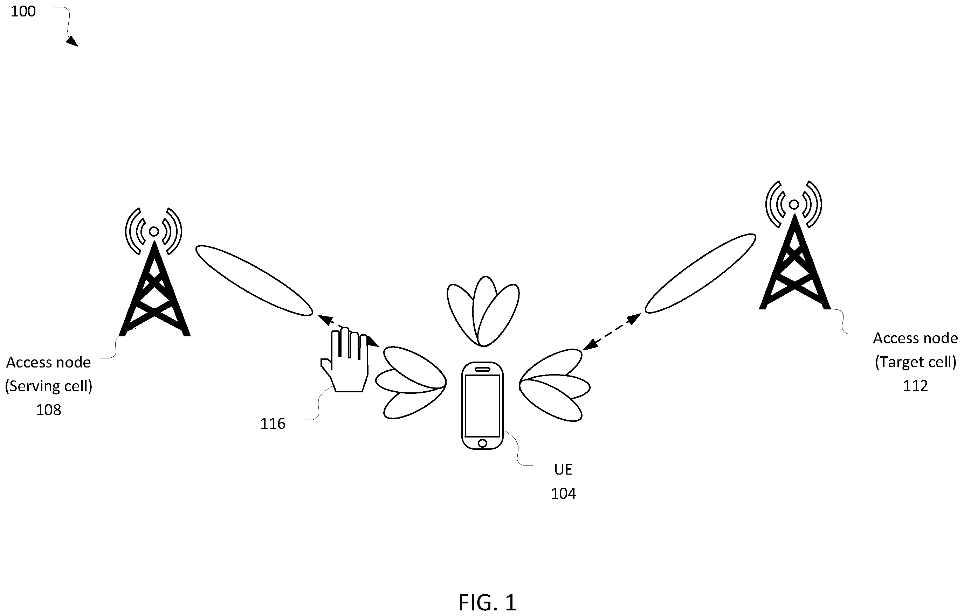

FIG. 1 illustrates a network environment 100 in accordance with some embodiments. The network environment 100 may include a UE 104 and one or more access nodes such as, for example, access nodes 108 and 112. The UE 104 and access nodes 108/112 may communicate over air interfaces compatible with 3GPP TSs such as those that define Long Term Evolution (LTE) or Fifth Generation (5G) new radio (NR) system standards. The access nodes 108/112 may be, or be controlled by, a base station such as a next generation node B (gNB). The access nodes 108/112 may provide one or more 5G New Radio (NR) cells to provide NR user plane and control plane protocol terminations toward the UE 104.

For descriptions of embodiments herein, the access node 108 may provide a serving cell with which the UE 104 is initially communicatively coupled and the access node 112 may provide a target cell. The UE 104 and access nodes 108/112 may cooperate to handover the communication session of the UE 104 from the serving cell to the target cell.

In some embodiments, the access node 112 may be a neighbor base station that provides coverage for an adjacent geographical location. In this embodiment, the access node 112 may provide a neighbor cell that operates independently and distinctly from the serving cell.

In some embodiments, the access node 108 may be one of a plurality of access nodes that provides service to the UE 104 through a dual connectivity (DC) operation. The access nodes may be coupled with each other via an X2 interface over an ideal or non-ideal backhaul. The access nodes may include a master node (MN) to provide a control plane connection to a core network. The MN may be associated with the group of serving cells referred to as a master cell group (MCG). The access nodes may further include a secondary node (SN) that may not have a control plane connection to the core network. The SN may be used to provide additional resources to the UE 104. The SN may be associated with a group of serving cells referred to as a secondary cell group (SCG). In these embodiments, the access node 108 may represent a first SN that provides a primary cell of the SCG (PSCell) and the access node 112 may represent a second SN. The handover may then involve the UE 104 transitioning the PSCell from the first SN to the second SN.

In some embodiments, the network may utilize a conditional handover (CHO) or conditional PSCell change (CPC) to improve mobility robustness and reliability. This may involve the access node 108 configuring the UE 104 with handover assistance information with respect to one or more candidate cells, and providing the one or more candidate cells with information about the UE 104. The UE 104 may then monitor link qualities for various handover conditions and, if detected, perform a handover to a target cell selected from the candidate cells without requiring a handover command from the access node 108. The serving cell may not be notified when the execution conditions are met and the UE 104 may directly execute the handover toward the target cell.

The Federal Communications Commission (FCC) and other regulatory bodies define limits on human body exposure to electromagnetic fields (EMF) in wireless communication systems. In NR frequency range 2 (FR2), which corresponds to frequency ranges 24,250 MHz-52,600 MHz, maximum permitted exposure (MPE) is defined as an averaged power measured over surface area in free space. The MPE is measured in units of milliwatts per square centimeter (mW/cm²) within a period of time (one second per FCC).

3GPP TSs indicates that if the transmit power in an uplink reaches the MPE limit, the UE is to reduce its transmit power. This may be done by directly reducing a power level used in the uplink transmissions, or reducing a duty cycle to reduce an average uplink transmit power. The UE 104 may directly reduce its power level by a power management maximum power reduction (P-MPR) value and may inform the network that the power level was reduced. To reduce the duty cycle, the network may adjust the uplink scheduling in order to reduce the average transmit power over a given time unit.

When operating in the higher frequency ranges, for example, FR2 and above, the UE 104 may engage in beamforming by focusing the transmit beams in a direction toward a receiving access node. To ensure the selected direction (and power) of the uplink transmit beam is suitable and complies with the MPE regulations, the UE 104 may perform a body proximity sensing (BPS) operation to detect the presence of a nearby body. A BPS operation may include transmitting a low-power sensing signal and using a receiver of the UE 104 to measure reflections of the sensing signal to determine human body proximity. If the UE 104 detects body 116 in the direction of the access node 108 that is providing the serving cell, the UE 104 may need to reduce its uplink transmit power based on MPE limits. This may compromise the quality of the uplink transmissions.

Embodiments of the present disclosure describe leveraging the pre-configuration performed for the CHO/CPC in order to handover to a target cell in the event the uplink transmit power of the UE 104 is reduced due to BPS/MPE. In some embodiments, the handover to the target cell may occur even though the handover conditions related to CHO/CPC are not met.

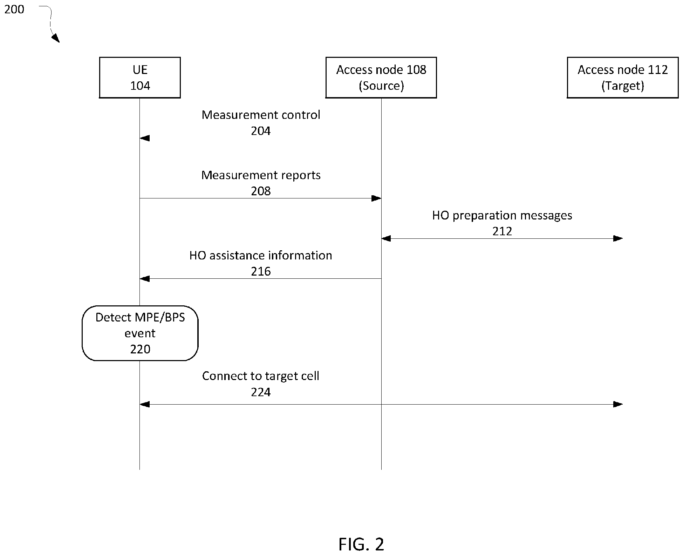

FIG. 2 illustrates a signaling diagram 200 in accordance with some embodiments. The signaling diagram 200 may include measurement control 204 sent from a source, for example, access node 108, to the UE 104. The measurement control 204 may represent one or more messages that include measurement configuration information that allows the UE 104 to perform measurements on various neighbor cells. The measurement configuration information may include one or more measurement objects that configure the measurements on various frequencies.

The UE 104 may perform measurements based on the measurement configurations in the measurement control 204 and provide results of the measurements to the access node 108 in one or more measurement reports 208.

Based on the measurement reports 208, the access node 108 may select one or more candidate access nodes (including access node 112) for potentially receiving a handover. The access node 108 may transmit/receive various handover (HO) preparation messages with the candidate access nodes. The HO preparation messages 212 may include a message transmitted from the access node 108 to the access node 112 that includes a context of the UE 104. The context may include UE state information, security information, UE capability information, and identity of a UE-associated logical connection over an S1 interface between the UE 104 and the access node 108.

The signaling diagram 200 may further include the access node 108 transmitting HO assistance information 216 to the UE 104. The HO assistance information may be transmitted in a radio resource control (RRC) message such as an RRC reconfiguration message. The HO assistance information may be configuration information corresponding to the one or more candidate cells selected by the access node. This may include identities or frequencies of the one or more candidate cells. The HO assistance information may further include execution conditions generated by the access node 108. The execution conditions may define the circumstances in which the UE 104 may perform the CHO/CPC.

The execution conditions may include A3 or A5 events. An A3 event may refer to the serving cell being a number of decibels (dB) worse than a target cell. An A5 event may refer to the serving cell being worse than a first threshold and the target cell being better than a second threshold. The signal metrics for measuring the serving/target cell may be one or more of reference signal receive power (RSRP), reference signal receive quality (RSRQ), or signal-to-interference-and-noise ratio (SINR). The thresholds/number of decibels may be configured by the HO assistance information 216, another configuration message, or predefined by a 3GPP TS.

At 220, the UE 104 may detect an MPE/BPS event. For example, the UE 104 may determine that an uplink transmit power exceeds the MPE limit or the UE 104 may sense a body in proximity of the UE 104. This may result in the UE 104 needing to reduce its uplink transmit power.

Based on the detection of the MPE/BPS event at 220, the UE 104 may proceed to connect to the target cell at 224. To do so, the UE 104 detaches from the access node 104, applies the stored corresponding configuration for the target cell, synchronizes to the target cell, and completes the RRC handover procedure by sending an RRC Reconfiguration Complete message to the access node 112. The UE 104 may release stored CHO configurations after successful completion of RRC handover procedure.

The connection to the target cell at 224 may be done even though the execution conditions for CHO/CPC (for example, A3/A5) are not met. Thus, based on the detected MPE/BPS event at 220, the UE 104 may perform an early CHO/CPC. An "early CHO/CPC," as used herein, may refer to performing a handover/PSCell change even though the configured execution conditions for CHO/CPC are not satisfied. The early CHO/CPC may be based on MPE/BPS.

In some embodiments, a number of early execution conditions may be configured for early CHO/CPC. The early execution conditions may be based on signaling conditions in the serving or target cell. For example, the UE 104 may perform the early CHO/CPC in the event a ratio between the reduced uplink transmit power to the serving cell (due to MPE limits) and an available uplink transmit power to the target cell is less than a predetermined threshold; the reduced uplink transmit power to the serving cell is less than an available uplink transmit power to the target cell by a predetermined threshold; or the reduced uplink transmit power is less than a first predetermined threshold and the available uplink transmit power to the target cell is greater than a second threshold. While the above early execution conditions refer to uplink transmit powers to the serving/target cells, similar conditions may be based on other factors that may be impacted by a reduced uplink transmit power including, for example, uplink throughput or downlink throughput.

In some embodiments, the UE 104 may inform the serving cell or the target cell that the reason for early CHO/CPC is due to MPE mitigation or BPS. The target cell may be informed of the reason for early CHO/CPC by adding an indication in an IE of the RRC reconfiguration complete message. Additionally or alternatively, the serving cell may be informed of the reason for early CHO/CPC by the MPE media access control (MAC)-control element (CE) signal transmitted by the UE 104 with the indication.

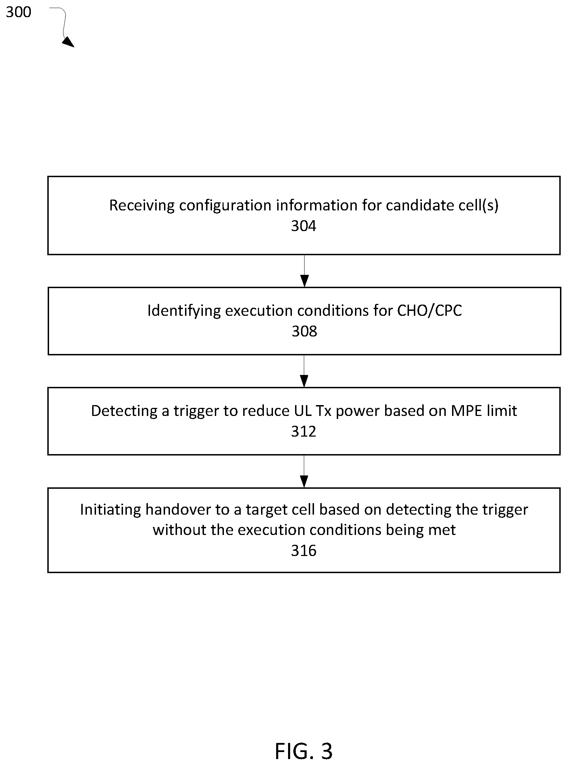

FIG. 3 illustrates an operation flow/algorithmic structure 300 in accordance with the invention. The operation flow/algorithmic structure 300 may be performed or implemented by a user equipment such as, for example, UE 104 or 600; or components thereof, for example, baseband processor 604A.

The operation flow/algorithmic structure 300 includes, at 304, receiving configuration information for one or more candidate cells. The configuration information may be received in an RRC message such as an RRC reconfiguration message. In some embodiments, the configuration information may include cell identifiers of the candidate cells that are to be considered for a CHO/CPC. The candidate cells may have been identified by a serving cell based on measurements performed by the UE on neighbor cells consistent with the measurement configurations

The operation flow/algorithmic structure 300 further includes, at 308, identifying execution conditions for CHO/CPC. In some embodiments, the execution conditions may be A3 or A5 events. In some embodiments, the thresholds corresponding to the execution conditions may be included in the RRC message that identifies the plurality of candidate cells.

The operation flow/algorithmic structure 300 further includes, at 312, detecting a trigger to reduce uplink transmit power based on an MPE limit. The trigger may be based on an uplink transmit power exceeding the MPE limit. In some embodiments, an MPE limit may be set based on an assumed body proximity. In additional/alternative embodiments, one or more MPE limits may correspond to conditions in which a body is or is not detected to be proximate to the UE. For example, a first MPE limit may be defined for use when no body is detected and a second, lower, MPE limit may be defined for use when a body is detected. In some embodiments, the second MPE limit may be restricted to a direction in which the body is detected, while the first MPE limit may correspond to a direction in which a body is not detected. Thus, in some situations, the UE's detection of a body may cause the UE to reduce its uplink transmit power in order to comply with a lower MPE limit.

The operation flow/algorithmic structure 300 further includes, at 316, initiating a handover to a target cell of the candidate cells based on detecting the trigger without the execution conditions being met. The reduction of uplink transmit power required in the serving cell may compromise uplink or downlink throughput with the serving cell. However, it may be possible to associate with one of the candidate cells without having to reduce an uplink transmit power or reducing the uplink transmit power by a smaller amount than that required in the serving cell. This may be the case when the UE is capable of performing uplink beamforming and directional MPE provides a higher MPE limit in directions not towards a detected body.

The UE may identify the target cell from the list of candidate cells provided in the RRC message based on signaling conditions associated with the target cell. The signaling conditions may include available uplink transmit power, uplink transmit beam, uplink signaling quality, or downlink signal quality.

In some embodiments, the UE may initiate a handover to the identified target cell based on early CHO/CPC execution conditions. These conditions may be configured along with, or separate from, the CHO/CPC execution conditions. The early CHO/CPC execution conditions may be based on a level by which the uplink transmit power is to be reduced in the serving cell in order to comply with the MPE limit. For example, signaling conditions of the serving cell (based on the reduced uplink transmit power) may be compared with signaling conditions of the target cell. This comparison may serve as a basis for initiating the early handover.

Initiating the handover may include starting synchronization with the target cell. Once the UE starts the synchronization with the target cell, the UE may no longer monitor the source cell.

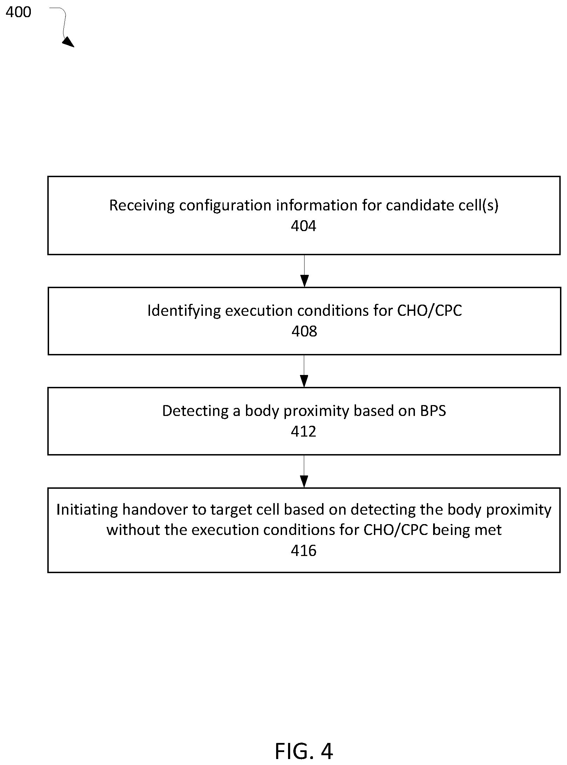

FIG. 4 illustrates an operation flow/algorithmic structure 400 in accordance with some embodiments. The operation flow/algorithmic structure 400 may be performed or implemented by a user equipment such as, for example, UE 104 or 600; or components thereof, for example, baseband processor 604A.

The operation flow/algorithmic structure 400 may include, at 404, receiving configuration information for one or more candidate cells. Similar to that described above, the configuration information may be received in an RRC message and may include cell identifiers of the candidate cells that are to be considered for a CHO/CPC. The candidate cells may have been identified by the serving cell based on measurements performed by the UE on neighbor cells consistent with measurement configurations.

The operation flow/algorithmic structure 400 may further include, at 408, identifying execution conditions for CHO/CPC. In some embodiments, the execution conditions may be A3 or A5 events. In some embodiments, the thresholds corresponding to the execution conditions may be included in the RRC message that identifies the candidate cells.

The operation flow/algorithmic structure 400 may further include, at 412, detecting a body proximity based on a BPS operation. The BPS operation may involve transmitting a BPS signal and monitoring for reception of the BPS signal as reflected off of a nearby body. If the reflected signal is greater than a predetermined threshold, the BPS operation may indicate that a body is in proximity to the UE.

If the UE includes more than one antenna panel or is otherwise capable of performing uplink beamforming, the UE may be capable of transmitting uplink signals in a direction away from the detected body. In some embodiments, the UE may perform a directional BPS operation in which beamformed BPS signals are transmitted during the BPS operation. This may allow the UE to determine uplink signals may be transmitted in a direction not towards the detected body.

The operation flow/algorithmic structure 400 may further include, at 416, initiating a handover to a target cell of the candidate cells based on detecting the trigger without the execution conditions of the CHO/CPC being met.

In some embodiments, the UE may identify the target cell from the list of candidate cells based on a direction of the target cell. For example, the UE may perform receive beam sweeping while measuring reference signals from the candidate cells. This may allow the UE to determine an approximate direction of the various candidate cells. The candidate cell in the direction away from the detected body may be identified as the target cell.

Detecting the target cell from the candidate cells and determining whether early CHO/CPC conditions are met may be based on signaling conditions in the serving and target cells similar to that described above with respect to FIG. 3.

In some embodiments, upon detecting a proximate body, the UE may determine an adjusted serving cell throughput based on various available exposure mitigation techniques. For example, to mitigate exposure sufficient to comply with the MPE limit, the UE may reduce an absolute uplink transmit power, reduce an average uplink transmit power by reducing an uplink duty cycle, or change an uplink transmit beam. While these techniques may cause the UE to comply with the MPE limit, they will also likely reduce UL/DL throughput with the serving cell. In some embodiments, the reduced throughput may be compared to the predetermined threshold or to a corresponding throughput of the target cell. This comparison may serve as a basis for initiating the handover at 416.

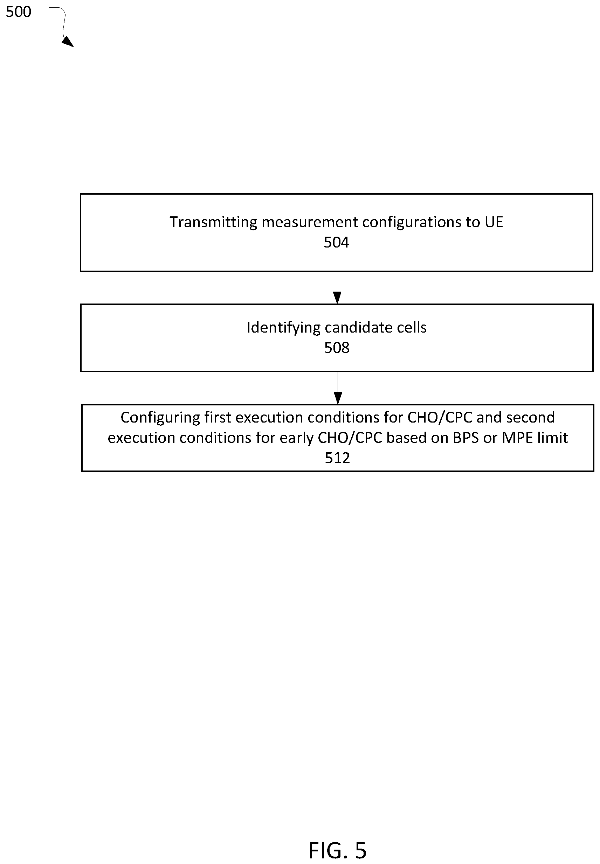

FIG. 5 illustrates an operation flow/algorithmic structure 500 in accordance with the invention. The operation flow/algorithmic structure 500 may be performed or implemented by a base station such as, for example, access node 108 or base station 700; or components thereof, for example, baseband processor 704A.

The operation flow/algorithmic structure 500 includes, at 504, transmitting measurement configurations to a UE. The measurement configurations may configure measurements on neighbor cells with respect to the UE. These measurement configurations may include inter-frequency measurement objects (MOs), intra-frequency MOs, inter-radio access technology (RAT) MOs, or intra-RAT MOs. The measurements may be configured to be performed within or outside of measurement gaps.

The operation flow/algorithmic structure 500 further includes, at 508, identifying candidates cells for CHO/CPC. The candidate cells may be identified based on results of measurements performed and reported by the UE. The base station may provide the candidate cells with the UE context to facilitate CHO/CPC.

The operation flow/algorithmic structure 500 further includes, at 512, configuring the UE with first execution conditions for CHO/CPC and second execution conditions for early CHO/CPC. The first execution conditions may be A3/A5 conditions for a standard CHO/CPC. The second execution conditions may be based on BPS or MPE limit. Similar to that discussed elsewhere herein, the second execution conditions may be based on signaling conditions in the serving cell (upon reduction of uplink transmit power to comply with MPE limit) and in the target cell.

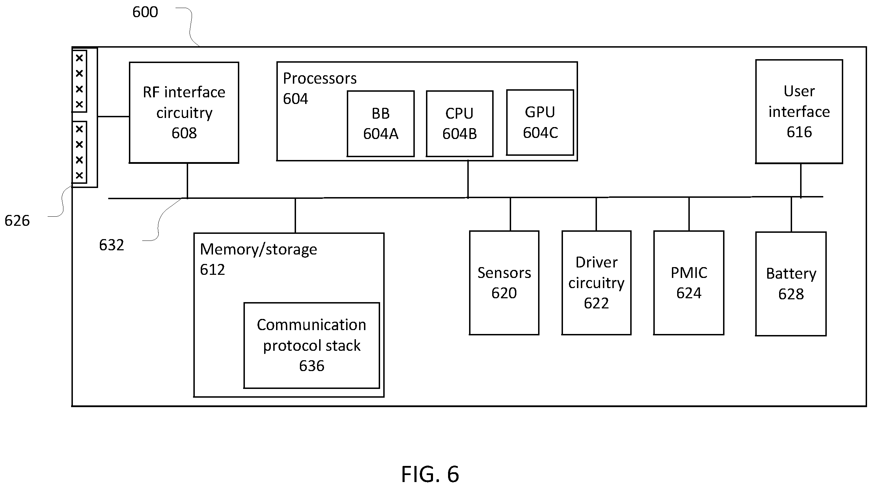

FIG. 6 illustrates a UE 600 in accordance with some embodiments. The UE 600 may be similar to and substantially interchangeable with UE 104 of FIG. 1.

The UE 600 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, or actuators), video surveillance/monitoring devices (for example, cameras or video cameras), wearable devices (for example, a smart watch), or Internet-of-things devices.

The UE 600 may include processors 604, RF interface circuitry 608, memory/storage 612, user interface 616, sensors 620, driver circuitry 622, power management integrated circuit (PMIC) 624, antenna structure 626, and battery 628. The components of the UE 600 may be implemented as integrated circuits (ICs), portions thereof, discrete electronic devices, or other modules, logic, hardware, software, firmware, or a combination thereof. The block diagram of FIG. 6 is intended to show a high-level view of some of the components of the UE 600. However, some of the components shown may be omitted, additional components may be present, and different arrangement of the components shown may occur in other implementations.

The components of the UE 600 may be coupled with various other components over one or more interconnects 632, which may represent any type of interface, input/output, bus (local, system, or expansion), transmission line, trace, or optical connection that allows various circuit components (on common or different chips or chipsets) to interact with one another.

The processors 604 may include processor circuitry such as, for example, baseband processor circuitry (BB) 604A, central processor unit circuitry (CPU) 604B, and graphics processor unit circuitry (GPU) 604C. The processors 604 may include any type of circuitry or processor circuitry that executes or otherwise operates computer-executable instructions, such as program code, software modules, or functional processes from memory/storage 612 to cause the UE 600 to perform operations as described herein.

In some embodiments, the baseband processor circuitry 604A may access a communication protocol stack 636 in the memory/storage 612 to communicate over a 3GPP compatible network. In general, the baseband processor circuitry 604A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum layer. In some embodiments, the PHY layer operations may additionally/alternatively be performed by the components of the RF interface circuitry 608.

The baseband processor circuitry 604A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The memory/storage 612 may include one or more non-transitory, computer-readable media that include instructions (for example, communication protocol stack 636) that may be executed by one or more of the processors 604 to cause the UE 600 to perform various operations described herein. The memory/storage 612 includes any type of volatile or non-volatile memory that may be distributed throughout the UE 600. In some embodiments, some of the memory/storage 612 may be located on the processors 604 themselves (for example, L1 and L2 cache), while other memory/storage 612 is external to the processors 604 but accessible thereto via a memory interface. The memory/storage 612 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 608 may include transceiver circuitry and a radio frequency front module (RFEM) that allows the UE 600 to communicate with other devices over a radio access network. The RF interface circuitry 608 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna structure 626 and proceed to filter and amplify (with a low-noise amplifier) the signal. The signal may be provided to a receiver of the transceiver that down-converts the RF signal into a baseband signal that is provided to the baseband processor of the processors 604.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 626.

In various embodiments, the RF interface circuitry 608 may be configured to transmit/receive signals in a manner compatible with NR access technologies.

The antenna 626 may include antenna elements to convert electrical signals into radio waves to travel through the air and to convert received radio waves into electrical signals. The antenna elements may be arranged into one or more antenna panels. The antenna 626 may have antenna panels that are omnidirectional, directional, or a combination thereof to enable beamforming and multiple input, multiple output communications. The antenna 626 may include microstrip antennas, printed antennas fabricated on the surface of one or more printed circuit boards, patch antennas, phased array antennas, etc. The antenna 626 may have one or more panels designed for specific frequency bands including bands in FR1 or FR2.

The user interface circuitry 616 includes various input/output (I/O) devices designed to enable user interaction with the UE 600. The user interface 616 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, projectors, etc.)), with the output of characters, graphics, multimedia objects, and the like being generated or produced from the operation of the UE 600.

The sensors 620 may include devices, modules, or subsystems whose purpose is to detect events or changes in their environment and send the information (sensor data) about the detected events to some other device, module, subsystem, etc. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 622 may include software and hardware elements that operate to control particular devices that are embedded in the UE 600, attached to the UE 1100, or otherwise communicatively coupled with the UE 600. The driver circuitry 622 may include individual drivers allowing other components to interact with or control various input/output (I/O) devices that may be present within, or connected to, the UE 600. For example, driver circuitry 622 may include a display driver to control and allow access to a display device, a touchscreen driver to control and allow access to a touchscreen interface, sensor drivers to obtain sensor readings of sensor circuitry 620 and control and allow access to sensor circuitry 620, drivers to obtain actuator positions of electro-mechanic components or control and allow access to the electro-mechanic components, a camera driver to control and allow access to an embedded image capture device, and audio drivers to control and allow access to one or more audio devices.

The PMIC 624 may manage power provided to various components of the UE 600. In particular, with respect to the processors 604, the PMIC 624 may control power-source selection, voltage scaling, battery charging, or DC-to-DC conversion.

A battery 628 may power the UE 600, although in some examples the UE 600 may be mounted deployed in a fixed location, and may have a power supply coupled to an electrical grid. The battery 628 may be a lithium ion battery, a metal-air battery, such as a zinc-air battery, an aluminum-air battery, a lithium-air battery, and the like. In some implementations, such as in vehicle-based applications, the battery 628 may be a typical lead-acid automotive battery.

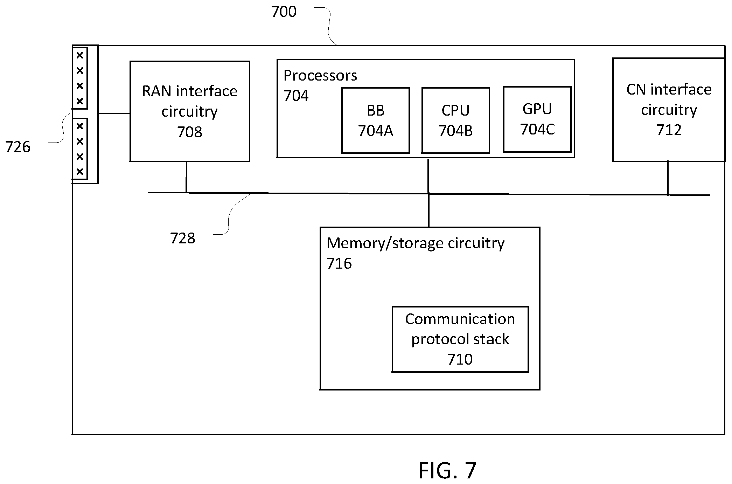

FIG. 7 illustrates a base station 700 in accordance with some embodiments. The base station 700 may be similar to and substantially interchangeable with base station 78 of FIG. 1.

The base station 700 may include processors 704, RF interface circuitry 708, core network (CN) interface circuitry 712, memory/storage circuitry 716, and antenna structure 726.

The components of the base station 700 may be coupled with various other components over one or more interconnects 728.

The processors 704, RF interface circuitry 708, memory/storage circuitry 716 (including communication protocol stack 710), antenna structure 726, and interconnects 728 may be similar to like-named elements shown and described with respect to FIG. 6.

The CN interface circuitry 712 may provide connectivity to a core network, for example, a 5^{th} Generation Core network (5GC) using a 5GC-compatible network interface protocol such as carrier Ethernet protocols, or some other suitable protocol. Network connectivity may be provided to/from the base station 700 via a fiber optic or wireless backhaul. The CN interface circuitry 712 may include one or more dedicated processors or FPGAs to communicate using one or more of the aforementioned protocols. In some implementations, the CN interface circuitry 712 may include multiple controllers to provide connectivity to other networks using the same or different protocols.

In some embodiments, the base station 700 may be coupled with transmit receive points (TRPs) using the antenna structure 726, CN interface circuitry, or other interface circuitry.

## Claims

1. A method to be implemented by a user equipment, UE (104), the method comprising:
receiving (304), from a serving cell, configuration information for one or more candidate cells;
identifying (308) one or more execution conditions for conditional handover, CHO, or conditional primary secondary cell, PSCell, change, CPC, with respect to the one or more candidate cells; **characterized in that** the method further comprises:
detecting (312) a trigger to reduce an uplink transmit power in the serving cell based on a maximum power exposure, MPE, limit; and
initiating (316) a handover to a target cell of the one or more candidate cells based on detecting of the trigger without the one or more execution conditions being met.

2. The method of claim 1, further comprising:
determining the uplink transmit power is to be reduced from a first level to a second level to comply with the MPE limit; and
performing the handover to the target cell based on the second level.

3. The method of claim 1, further comprising:
determining signaling conditions in the target cell; and
performing the handover to the target cell based further on the signaling conditions,
wherein determining signaling conditions includes determining an available uplink transmit power to the target cell or a signal quality of a downlink signal of the target cell.

4. The method of claim 1, further comprising:
calculating throughput with respect to the serving cell or the target cell; and
performing the handover based on the throughput.

5. The method of any one of claims 1-4, wherein detecting (312) the trigger comprises:
sensing a body proximity.

6. The method of claim 1, further comprising:
transmitting, to the target cell, a radio resource control, RRC, message that includes an indication that initiating (316) the handover was done without the one or more execution conditions being met; or
transmitting, to the serving cell, a media access control, MAC, control element, CE, that includes an indication that initiating (316) the handover was done without the one or more execution conditions being met.

7. An apparatus, associated with a user equipment, UE, comprising:
processing circuitry, to receive, from a serving cell, configuration information for a target cell; identify one or more execution conditions for conditional handover, CHO, or conditional primary secondary cell, PSCell, change, CPC, to the target cell;
**characterized in that** the processing circuitry is further configured to:
detect a proximate body based on a body proximity sensing, BPS, operation; and initiate (316) the handover to the target cell based on detecting (312) the proximate body without the one or more execution conditions being met.

8. The apparatus of claim 7, wherein the processing circuitry is further to:
compare an adjusted serving cell throughput based on an available exposure mitigation technique to a threshold or to a target cell throughput; and
initiate (316) the handover to the target cell based on comparison of the adjusted serving cell throughput to the threshold or to the target cell throughput,
wherein the available exposure mitigation technique is to reduce directional exposure based on a maximum permissible exposure limit and comprises:
reducing an uplink transmit power; reducing an average uplink transmit power by reducing an uplink duty cycle; or changing an uplink transmit beam.

9. The apparatus of claim 7 or 8, wherein the processing circuitry is further to:
determine signaling conditions in the target cell; and
perform the handover to the target cell based further on the signaling conditions.

10. The apparatus of any one of claims 7-9, wherein the target cell is a neighbor cell or a primary cell of a secondary cell group.

11. The apparatus of any one of claims 7-10, wherein the processing circuitry is further to:
receive configuration information for a plurality of candidate cells; and
identify the target cell from the plurality of candidate cells based on a measurement of the target cell.

12. The apparatus of any one of claims 7 to 11, wherein the processing circuitry is further to configure radio frequency, RF, interface circuitry to:
transmit, to the target cell, a radio resource control, RRC, message that includes an indication that initiating the handover was done without the one or more execution conditions being met; or
transmit, to the serving cell, a media access control, MAC, control element, CE, that includes an indication that initiating the handover was done without the one or more execution conditions being met.

13. The apparatus of any one of claims 7 to 12, wherein to initiate (316) the handover the processing circuitry is to:
initiate (316) a synchronization with the target cell.

14. A method of operating a base station (700), the method comprising:
transmitting (504), to a user equipment, UE, measurement configurations with respect to one or more neighbor cells;
identifying (508) at least one candidate cell from the one or more neighbor cells based on measurement reports received from the UE (104); **characterized in that** the method further comprises:
transmitting (512), to the UE (104), information to configure (512) first execution conditions for conditional handover, CHO, or conditional primary secondary cell change, CPC, to a target cell of the at least one candidate cell, and to configure second execution conditions for an early CHO or an early CPC, which is to be performed when the first execution conditions are not satisfied, based on body positioning sensing or a maximum permissible exposure, MPE, limit.

15. The method of claim 14, further comprising:
receive, from the UE (104), a media access control, MAC, control element, CE, that includes an indication that the UE (104) is to handover to the target cell without the first execution conditions being met.

## Patentansprüche

1. Verfahren, das durch eine Benutzervorrichtung, UE (104), zu implementieren ist, wobei das Verfahren Folgendes umfasst:
Empfangen (304) von Konfigurationsinformationen für eine oder mehrere Kandidatenzellen von einer versorgenden Zelle;
Identifizieren (308) einer oder mehrerer Ausführungsbedingungen für eine bedingte Übergabe, CHO, oder eine bedingte Änderung einer primären Sekundärzelle, PSCell, CPC, in Bezug auf die eine oder die mehreren Kandidatenzellen;
**dadurch gekennzeichnet, dass** das Verfahren ferner Folgendes umfasst:
Detektieren (312) eines Auslösers zum Reduzieren einer Uplink-Sendeleistung in der versorgenden Zelle basierend auf einer maximalen Leistungsexpositionsgrenze, MPE-Grenze; und
Initiieren (316) einer Übergabe an eine Zielzelle der einen oder der mehreren Kandidatenzellen basierend auf dem Detektieren des Auslösers, ohne dass die eine oder die mehreren Ausführungsbedingungen erfüllt sind.

2. Verfahren nach Anspruch 1, das ferner Folgendes umfasst:
Bestimmen, dass die Uplink-Sendeleistung von einem ersten Pegel auf einen zweiten Pegel reduziert werden soll, um die MPE-Grenze einzuhalten; und
Durchführen der Übergabe an die Zielzelle basierend auf dem zweiten Pegel.

3. Verfahren nach Anspruch 1, das ferner Folgendes umfasst:
Bestimmen von Signalisierungsbedingungen in der Zielzelle; und
Durchführen der Übergabe an die Zielzelle ferner basierend auf den Signalisierungsbedingungen,
wobei das Bestimmen von Signalisierungsbedingungen ein Bestimmen einer verfügbaren Uplink-Sendeleistung für die Zielzelle oder einer Signalqualität eines Downlink-Signals der Zielzelle beinhaltet.

4. Verfahren nach Anspruch 1, das ferner Folgendes umfasst:
Berechnen eines Durchsatzes in Bezug auf die versorgende Zelle oder die Zielzelle; und
Durchführen der Übergabe basierend auf dem Durchsatz.

5. Verfahren nach einem der Ansprüche 1-4, wobei das Detektieren (312) des Auslösers Folgendes umfasst:
Erfassen einer Körpernähe.

6. Verfahren nach Anspruch 1, das ferner Folgendes umfasst:
Senden, an die Zielzelle, einer Funkressourcensteuerungs-, RRC-, Nachricht, die eine Anzeige beinhaltet, dass das Initiieren (316) der Übergabe durchgeführt wurde, ohne dass die eine oder die mehreren Ausführungsbedingungen erfüllt sind; oder
Senden, an die versorgende Zelle, eines Medienzugriffssteuerungs-, MAC-, Steuerelements, CE, das eine Anzeige beinhaltet, dass das Initiieren (316) der Übergabe durchgeführt wurde, ohne dass die eine oder die mehreren Ausführungsbedingungen erfüllt sind.

7. Vorrichtung, die mit einer Benutzervorrichtung, UE, assoziiert ist, die Folgendes umfasst:
Verarbeitungsschaltung, um
Konfigurationsinformationen für eine Zielzelle von einer versorgenden Zelle zu empfangen;
eine oder mehrere Ausführungsbedingungen für eine bedingte Übergabe, CHO, oder eine bedingte Änderung einer primären Sekundärzelle, PSCell, CPC, an die Zielzelle zu identifizieren;
**dadurch gekennzeichnet, dass** die Verarbeitungsschaltung ferner für Folgendes konfiguriert ist:
Detektieren eines nahen Körpers basierend auf einer Körpernäheerfassungsoperation, BPS-Operation; und
Initiieren (316) der Übergabe an die Zielzelle basierend auf dem Detektieren (312) des nahen Körpers, ohne dass die eine oder die mehreren Ausführungsbedingungen erfüllt sind.

8. Vorrichtung nach Anspruch 7, wobei die Verarbeitungsschaltung ferner für Folgendes konfiguriert ist:
Vergleichen eines angepassten Durchsatzes der versorgenden Zelle basierend auf einer verfügbaren Expositionsminderungstechnik mit einem Schwellenwert oder mit einem Zielzellendurchsatz; und
Initiieren (316) der Übergabe an die Zielzelle basierend auf dem Vergleich des angepassten Durchsatzes der versorgenden Zelle mit dem Schwellenwert oder mit dem Zielzellendurchsatz,
wobei die verfügbare Expositionsminderungstechnik die Richtungsexposition basierend auf einer maximal zulässigen Expositionsgrenze reduzieren soll und Folgendes umfasst:
Reduzieren einer Uplink-Sendeleistung; Reduzieren einer durchschnittlichen Uplink-Sendeleistung durch Reduzieren eines Uplink-Tastverhältnisses; oder Ändern eines Uplink-Sendestrahls.

9. Vorrichtung nach Anspruch 7 oder 8, wobei die Verarbeitungsschaltung ferner für Folgendes konfiguriert ist:
Bestimmen von Signalisierungsbedingungen in der Zielzelle; und
Durchführen der Übergabe an die Zielzelle ferner basierend auf den Signalisierungsbedingungen.

10. Vorrichtung nach einem der Ansprüche 7-9, wobei die Zielzelle eine Nachbarzelle oder eine Primärzelle einer Sekundärzellengruppe ist.

11. Vorrichtung nach einem der Ansprüche 7-10, wobei die Verarbeitungsschaltung ferner für Folgendes konfiguriert ist:
Empfangen von Konfigurationsinformationen für mehrere Kandidatenzellen; und
Identifizieren der Zielzelle aus den mehreren Kandidatenzellen basierend auf einer Messung der Zielzelle.

12. Vorrichtung nach einem der Ansprüche 7 bis 11, wobei die Verarbeitungsschaltung ferner für Folgendes konfiguriert ist:
Senden, an die Zielzelle, einer Funkressourcensteuerungs-, RRC-, Nachricht, die eine Anzeige beinhaltet, dass das Initiieren der Übergabe durchgeführt wurde, ohne dass die eine oder die mehreren Ausführungsbedingungen erfüllt sind; oder
Senden, an die versorgende Zelle, eines Medienzugriffssteuerungs-, MAC-, Steuerelements, CE, das eine Anzeige beinhaltet, dass das Initiieren der Übergabe durchgeführt wurde, ohne dass die eine oder die mehreren Ausführungsbedingungen erfüllt sind.

13. Vorrichtung nach einem der Ansprüche 7 bis 12, wobei die Verarbeitungsschaltung zum Initiieren (316) der Übergabe für Folgendes konfiguriert ist:
Initiieren (316) einer Synchronisation mit der Zielzelle.

14. Verfahren zum Betreiben einer Basisstation (700), wobei das Verfahren Folgendes umfasst:
Übertragen (504) von Messkonfigurationen in Bezug auf eine oder mehrere Nachbarzellen an eine Benutzervorrichtung, UE;
Identifizieren (508) mindestens einer Kandidatenzelle aus der einen oder den mehreren Nachbarzellen basierend auf Messberichten, die von der UE (104) empfangen werden;
**dadurch gekennzeichnet, dass** das Verfahren ferner Folgendes umfasst:
Übertragen (512) von Informationen an die UE (104), um erste Ausführungsbedingungen für eine bedingte Übergabe, CHO, oder eine bedingte Änderung einer primären Sekundärzelle, CPC, an eine Zielzelle der mindestens einen Kandidatenzelle zu konfigurieren (512) und um zweite Ausführungsbedingungen für eine frühe CHO oder eine frühe CPC, die durchgeführt werden soll, wenn die ersten Ausführungsbedingungen nicht erfüllt sind, basierend auf einer Körperpositionierungserfassung oder einer maximal zulässigen Expositionsgrenze, MPE-Grenze, zu konfigurieren.

15. Verfahren nach Anspruch 14, das ferner Folgendes umfasst:
Empfangen, von der UE (104), eines Medienzugriffssteuerungs-, MAC-, Steuerelements, CE, das eine Anzeige beinhaltet, dass die UE (104) an die Zielzelle übergeben soll, ohne dass die ersten Ausführungsbedingungen erfüllt sind.

## Revendications

1. Un procédé destiné à être implémenté par un équipement utilisateur, UE (104), le procédé comprenant :
la réception (304), en provenance d'une cellule de desserte, d'une information de configuration pour une ou plusieurs cellules candidates ;
l'identification (308) d'une ou plusieurs conditions d'exécution pour un handover conditionnel, CHO, ou un changement conditionnel de cellule secondaire primaire, PSCell, CPC, en rapport avec une ou plusieurs cellules candidates ; **caractérisé en ce que** le procédé comprend en outre :
la détection (312) d'un déclencheur pour réduire une puissance d'émission de liaison montante dans la cellule de desserte sur la base d'une limite d'exposition maximale de puissance, MPE ; et
l'initiation (316) d'un handover vers une cellule cible des une ou plusieurs cellules candidates sur la base de la détection du déclencheur sans que les une ou plusieurs conditions d'exécution ne soient vérifiées.

2. Le procédé de la revendication 1, comprenant en outre :
la détermination que la puissance d'émission de liaison montante doit être réduite d'un premier niveau à un second niveau pour se conformer à la limite de MPE ; et
l'exécution du handover vers la cellule cible sur la base du second niveau.

3. Le procédé de la revendication 1, comprenant en outre :
la détermination de conditions de signalisation dans la cellule cible ; et
l'exécution du handover vers la cellule cible sur la base en outre des conditions de signalisation,
dans lequel la détermination des conditions de signalisation comprend la détermination d'une puissance d'émission de liaison montante disponible vers la cellule cible ou d'une qualité de signal d'un signal de liaison descendante de la cellule cible.

4. Le procédé de la revendication 1, comprenant en outre :
le calcul du débit possible par rapport à la cellule de desserte ou la cellule cible ; et
l'exécution du handover sur la base du débit possible.

5. Le procédé de l'une des revendications 1 à 4, dans lequel la détection (312) du déclencheur comprend :
la détection d'une proximité d'un corps.

6. Le procédé de la revendication 1, comprenant en outre :
la transmission, à la cellule cible, d'un message de contrôle de ressource radio, RRC, qui comprend une indication que l'initiation (316) du handover a été effectuée sans que les une ou plusieurs conditions d'exécution ne soient vérifiées ; ou
la transmission, à la cellule de desserte, d'un élément de contrôle, CE, de contrôle d'accès au support, MAC, qui comprend une indication que l'initiation (316) du handover a été effectuée sans que les une ou plusieurs conditions d'exécution ne soient vérifiées.

7. Un appareil, associé à un équipement utilisateur, UE, comprenant :
une circuiterie de traitement, pour
recevoir, en provenance d'une cellule de desserte, une information de configuration pour une cellule cible ;
identifier une ou plusieurs conditions d'exécution pour un handover conditionnel, CHO, ou un changement conditionnel de cellule secondaire primaire, PSCell, CPC, vers la cellule cible ; **caractérisé en ce que** la circuiterie de traitement est en outre configurée pour :
détecter un corps à proximité sur la base d'une opération de détection de proximité de corps, DPS ; et
initier (316) le handover vers la cellule cible sur la base de la détection (312) du corps à proximité sans que les une ou plusieurs conditions d'exécution ne soient vérifiées.

8. L'appareil de la revendication 7, dans lequel la circuiterie de traitement sert en outre à :
comparer un débit possible ajusté de cellule de desserte, basé sur une technique de palliation d'exposition disponible, avec un seuil ou avec un débit possible de cellule cible ; et
initier (316) le handover vers la cellule cible sur la base de la comparaison du débit possible ajusté de cellule de desserte avec le seuil ou avec le débit possible de cellule cible,
dans lequel la technique de palliation d'exposition disponible sert à réduire une exposition directionnelle sur la base d'une limite maximale permissible d'exposition, et comprend :
la réduction d'une puissance d'émission de liaison montante ; la réduction d'une puissance d'émission de liaison montante moyenne par réduction d'un rapport cyclique de liaison montante ; ou le changement d'un faisceau d'émission de liaison montante.

9. L'appareil de la revendication 7 ou 8, dans lequel la circuiterie de traitement sert en outre à :
déterminer des conditions de signalisation dans la cellule cible ; et
effectuer le handover vers la cellule cible en outre sur la base des conditions de signalisation.

10. L'appareil de l'une des revendications 7 à 9, dans lequel la cellule cible est une cellule voisine ou une cellule primaire d'un groupe de cellules secondaires.

11. L'appareil de l'une des revendications 7 à 10, dans lequel la circuiterie de traitement sert en outre à :
recevoir une information de configuration pour une pluralité de cellules candidates ; et
identifier la cellule cible parmi la pluralité de cellules candidates sur la base d'une mesure de la cellule cible.

12. L'appareil de l'une des revendications 7 à 11, dans lequel la circuiterie de traitement sert en outre à configurer une circuiterie d'interfaçage radiofréquence, RF, pour :
transmettre, à la cellule cible, un message de contrôle de ressource radio, RRC, qui comprend une indication que l'initiation du handover a été effectuée sans que les une ou plusieurs conditions d'exécution ne soient vérifiées ; ou
transmettre, à la cellule cible, un élément de contrôle, CE, de contrôle d'accès au support, MAC, qui comprend une indication que l'initiation du handover a été effectuée sans que les une ou plusieurs conditions d'exécution ne soient vérifiées.

13. L'appareil de l'une des revendications 7 à 12, dans lequel, pour initier (316) le handover, la circuiterie de traitement est pour :
initier (316) une synchronisation avec la cellule cible.

14. Un procédé de mise en œuvre d'une station de base (700), le procédé comprenant :
la transmission (504), à un équipement utilisateur, UE, de configurations de mesure en rapport avec une ou plusieurs cellules voisines ;
l'identification (508) d'au moins une cellule candidate parmi les une ou plusieurs cellules voisines sur la base de comptes rendus de mesure reçus en provenance de l'UE (104) ; **caractérisé en ce que** le procédé comprend en outre :
la transmission (512), à l'UE (104), d'une information pour configurer (512) des premières conditions d'exécution pour un handover conditionnel, CHO, ou un changement conditionnel de cellule secondaire primaire, CPC, vers une cellule cible de l'au moins une cellule candidate, et pour configurer des secondes conditions d'exécution pour un CHO prématuré ou un CPC prématuré, qui doit être effectué lorsque les premières conditions d'exécution ne sont pas vérifiées, sur la base d'une détection de positionnement d'un corps ou d'une limite d'exposition maximale permissible, MPE.

15. Le procédé de la revendication 14, comprenant en outre :
la réception, en provenance de l'UE (104), d'un élément de contrôle, CE, de contrôle d'accès au support, MAC, qui comprend une indication que l'UE doit effectuer un handover vers la cellule cible sans que les premières conditions d'exécution ne soient vérifiées.
